Europäisches Patentamt

(19) European Patent Office

Office européen des brevets

(11) Publication number: **0 104 811**
**B1**

# (12) EUROPEAN PATENT SPECIFICATION

(45) Date of publication of patent specification: **08.04.87**

(51) Int. Cl.⁴: **B 29 C 59/04**

(21) Application number: **83305198.0**

(22) Date of filing: **07.09.83**

(54) **Method of and apparatus for embossing and controlling the web tension in a continuous, moving web.**

(30) Priority: **09.09.82 ZA 826633**

(43) Date of publication of application:
**04.04.84 Bulletin 84/14**

(45) Publication of the grant of the patent:
**08.04.87 Bulletin 87/15**

(84) Designated Contracting States:
**BE CH DE FR GB IT LI NL SE**

(56) References cited:
**AT-B- 318 228**
**DD-A- 117 049**
**DE-A-2 456 767**
**DE-A-3 016 568**
**DE-B-2 100 330**
**US-A-3 894 827**
**US-A-3 950 480**

(73) Proprietor: **AECI LIMITED**
**16th Floor Office Tower Carlton Centre**
**Commissioner Street P.O. Box 1122**
**Johannesburg 2000 Transvaal (ZA)**

(72) Inventor: **Le Maitre, Richard Bruce Carlyle**
**14 Picardy Avenue**
**Somerset West Cape Province (ZA)**

(74) Representative: **Arthur, Bryan Edward et al**
**Withers & Rogers 4 Dyer's Buildings Holborn**
**London EC1N 2JT (GB)**

Courier Press, Leamington Spa, England.

## Description

This invention relates generally to the handling and/or processing of continuous, moving webs. More particularly, the invention relates to a method of and apparatus for embossing a continuous, moving web on a face thereof formed by a thermoplastic material.

Several difficulties are encountered in the existing art of embossing thermoplastic webs. Many of these difficulties arise from tensions which there exist in the web during certain stages of processing.

One of these difficulties arises when the web is cooled while under tension. When subjected to tension, the web is deformed or strained by stretching, particularly when the web is at an elevated temperature required for embossing to take place. At least part of this deformation by stretching is elastic deformation which is retained or 'memorised' when the web is cooled. This leads to a product which tends to shrink during use, as the 'memory' is slowly being released, particularly if the material is subjected to heat. This tendency to shrink is referred to as dimensional instability. The conventional manner of heating thermoplastic webs prior to embossing is to pass the web over a heating drum. Here, the two major areas where stretching takes place are (a) where the web leaves the heating drum and (b) where the web is stripped or pulled off the embossing roller used to emboss the web. The web tends to adhere to the hot heating drum or to the embossing roller and tension has to be applied to pull it away from the drum or roller. Failure to pull the web away from the drum or roller under sufficient tension leads to a condition known as 'wrap-around' which, if it has occurred, requires the apparatus to be shut down, the damaged portion of the web to be cut away, the web to be rejoined and the apparatus to be restarted. In view of the considerable loss in production time and material which this would lead to, the tendency is to run the apparatus at web tensions which are generally higher than they need be at any particular time. Also, when the apparatus is operating at low web tensions, constant operator supervision is required, whereas, when it operates at high web tensions, the apparatus can be left unattended for periods of time. This results in operators running the apparatus at web tensions which are higher than they should be. Accordingly, dimensional instability is a real problem.

US—A—3 950 480 discloses a process and an apparatus showing the prior art features of independent claims 1 and 8 respectively. In this embossing process heating of this web prior to embossing is effected exclusively by means of a non-contacting heat source such as heat radiators or hot air flow. Although this eliminates stretching as a result of the web adhering to a drum or other contacting heat source, the problem of instability caused by having to strip the web off the embossing roller remains.

It is an object of the present invention to improve the dimensional stability of embossed thermoplastic webs.

According to the invention, in a method of embossing a continuous, moving web on a face thereof formed by a thermoplastic material, wherein the web is heated to a temperature sufficient for embossing to take place, the heated web passed through an embosser to emboss the web, and the web then drawn from the embosser under tension: the web, after having emerged from the embosser and having cooled, is reheated in a reheating station to a temperature less than that at which the embossing is destroyed, and is thereafter cooled to room temperature; and the tension in the web between the embosser and the reheating station is reduced by causing a portion of the web between the embosser and the reheating station to sag and thus form a first sagging portion, sensing the depth of sag of the first sagging portion using first sensing means, and automatically in response to the first sensing means controlling the speed of movement of the web in the reheating station relative to that in the embosser in accordance with the sensed depth of sag.

The first sensing means may comprise a photo-electric emitter and a photo-electric sensor arranged to have a line of sight between them interrupted by the first sagging portion.

The web may extend downwardly to the embosser from an undriven roller; the web fed to the undriven roller by driven feed-in means; the web caused to sag and thus form a second sagging portion between the feed-in means and the undriven roller; the depth of sag of the second sagging portion sensed using second sensing means; and the speed of movement of the web in the embosser in relation so that in the feed-in means automatically controlled in response to the second sensing means in accordance with the sensed depth of sag, thereby to control the tension in the web where the web enters the embosser.

The second sensing means may also comprise a photo-electric emitter and a photo-electric sensor, these being arranged to have the line of sight between them interrupted by the second sagging portion.

The temperature to which the thermoplastic material is re-heated is preferably less than that to which it is heated prior to entering the embosser. Where the thermoplastic material is a polyvinylchloride material, the web may, prior to entering the embosser, be heated to about 152°C (front face) and 134°C (rear face). The temperature of reheating may then be in the order of 80°C to 1000°C.

In one form of the invention, re-heating of the web may take place by means of radiant heat. In another form of the invention, re-heating may take place through conduction, by passing the web around a heated, rotary drum. In yet another form of the invention, re-heating may take place through convection, by causing a heated fluid to flow over the surface of the web. In this form of re-heating, the web may be suspended in jets of said heating fluid.

Re-heating by means of radiant heat will be particularly suitable for sheet webs having a thickness of more than about 300 micron, whereas re-heating by means of conduction or convection will be more suitable for film webs having a thickness of less than about 300 micron.

The web may be worked during its being reheated or immediately after its having been reheated, by repeatedly flexing the web.

Where the cooling to room temperature takes place in a cooling station, a portion of the web between the reheating station and the cooling station may be caused to sag and thus form a third sagging portion; the depth of sag of the third sagging portion sensed using third sensing means; and the speed of movement of the web in the cooling station relative to that in the reheating station automatically controlled in response to the third sensing means in accordance with the sensed depth of sag.

The third sensing means may also comprise a photo-electric emitter and a photo-electric sensor, these being arranged to have the line of sight between them interrupted by the third sagging portion.

Cooling of the web to room temperature may take place through conduction, by passing the web around one or more rotary cooling drums; or through convection, by causing a relatively cold fluid to flow over the surface of the web, in which event the web may be suspended in jets of cold fluid.

The heat withdrawn through cooling of the web may, at least partially, be utilised in the re-heating step. In this event, use may be made of a heat pump.

Further according to the invention, in apparatus for embossing a continuous, moving web on a face thereof formed by a thermoplastic material, which comprises heating means for heating the web to a temperature sufficient for embossing to take place, an embosser for embossing the heat web, and stripping means for drawing the web from the embosser under tension; there is further provided reheating means for reheating the web after having emerged from the embosser and having cooled; transportion means for transorting the web past the reheating means; first sensing means for sensing the depth of sag of a first sagging portion of the web between the stripping means and the transportion means; and first control means, the first control means being operative in response to the first sensing means automatically to control the speed of the transportation means relative to that of the first stripping means in accordance with the sensed depth of sag.

The apparatus may further comprise a driven feed-in and an undriven roller downstream of the feed-in device, for feeding the web to the embosser, second sensing means for sensing the depth of sag of a sagging portion of the web between the feed-in device and the undriven roller, and the second control means operative in response to the second sensing means automatically to control the speed of the embosser relative to that of the feed-in device in accordance with the sensed depth of sag.

The apparatus may further comprise a cooling station for cooling the web to room temperature after said reheating, and drive means for moving the web through the cooling station, third sensing means for sensing the depth of sag of a third sagging portion of the web between the transportation means and the cooling station, and third control means, the third control means being operative in response to the third sensing means automatically to control the speed of said drive means relative to that of the transportation means in accordance with the sensed depth of sag.

The invention will now be described in more detail, by way of example, with reference to the accompanying drawings.

In the drawings:

Figure 1 shows an embossing apparatus in accordance with a first embodiment of the invention;

Figure 2 shows an embossing apparatus in accordance with a second embodiment of the invention;

Figure 3 shows an embossing apparatus in accordance with a third embodiment of the invention;

Figure 4 shows an embossing apparatus in accordance with a fourth embodiment of the invention;

Figure 5 shows an embossing apparatus in accordance with a fifth embodiment of the invention;

Figure 6 is a three dimensional view of part of the embossing apparatus of Figures 1, 2, or 3; and

Figure 7 is an end view showing the arrangement of sensing means for use in controlling the speed of different sections of the web being embossed by the apparatus.

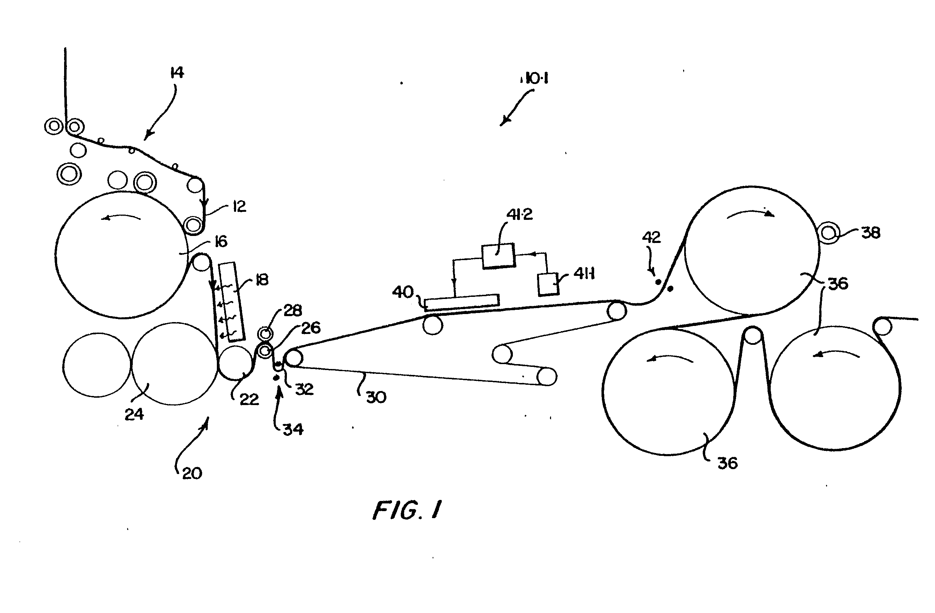

Referring first to Figure 1, reference numeral 10.1 generally indicates an embossing apparatus for embossing web 12 of thermoplastic material. The apparatus comprises guide rollers, which are generally indicated at 14, for guiding the web 12 from a wind-off drum (not shown) to a driven heating drum 16. In passing around the heating drum 16, the web 12 is held between the surface of the heating drum and a travelling blanket (not shown) which is arranged in an endless, C-shaped loop partly enveloping the heating drum. From the heating drum 16, the web 12 passes downwardly, past a radiant heater 18, to an embosser indicated by reference numeral 20. The embosser comprises a driven embossing roller 22 and a freely rotatable counter bole 24 which is pressed against the embossing roller. The web 12 enters the nip between the embossing roller 22 and the counter bole 24, passes partly around the embossing roller, and is then stripped away from the embossing roller by means of a driven stripping roller 26. An idling roller 28 is placed against the stripping roller 26 to form a nip through which the web 12 passes. From the stripping roller 26, the web 12 moves onto an endless transportation belt 30, the belt being driven, and the web being supported on the upper run of the belt. Between the stripping roller 26 and the transportation belt 30, the web 12 is allowed to sag, thereby forming a sagging portion 32. Sensing means 34 is provided to sense the depth of sag.

From the transportation belt 30, the web 12 passes over a series of three cooling drums 36. The first of the cooling drums 36 is provided with a lay-on roller 38, for preventing the web 12 from slipping relative to the drum. From the last of the cooling drums 36, the web 12 is fed to a wind-up mechanism (not shown), there being means (also not shown) between the cooling drums and the wind-up mechanism, for trimming the edges of the web.

Above the transportation belt 30 there is a radiant heater 40. The radiant heater 40 preferably comprises flattened 'Nichrome' heating elements adapted to provided heat energy which lies predominantly in the infra-red region of the spectrum.

In operation, where the web is a pvc material, the temperature of the heating drum 16 is adjusted to raise the temperature of the web 12 throughout its thickness to about 134°C. The radiant heater 18 is adjusted to further heat the front face (i.e. the face which is to be embossed) to a temperature of about 152°C.

The embossing roller has an engraved surface for providing the front face of the web with a desired embossed pattern. The embossing roller 22 is cooled, so that it will cool the web 12 as the web passes through the embosser.

Formation of the sagging portion 32 will be effective to isolate that portion of the web which is transported by the transportation belt 30 from any tension which may be necessary to pull or strip the web away from the embossing roller. The depth of sag is controlled by utilising the sensing means 34 to sense the depth of sag and, in response to the sensing means, controlling the speed of the transportation belt 30 in relation to that of the stripping roller 26. The construction and operation of the sensing means 34 will be described in more detail hereinafter.

As the web 12 passes beneath the radiant heater 40, the web is re-heated. The radiant heater 40 is adjusted to re-heat the web to a temperature of between about 80°C and 100°C. If desired, a pyrometer 41.1 may be provided for sensing the temperature of the web downstream of the heater 40. In addition, control means 41.2 may be provided for automatically, in response to the pyrometer 41.1 controlling the heat output of the heater 40. Any tension set up in the web 12 as it passes over the driven cooling drums 36 and from there to the wind-up mechanism is isolated from that part of the web which is transported on the transportation bel by causing the web between the end of the transportation belt 30 and the first of the cooling drums 36 to sag. By utilising sensing means 42 which, in the same manner as the sensing means 34, is arranged to sense the depth of sag of the web 12, the speed of the cooling drums 36 relative to that of the belt 30 is automatically controlled.

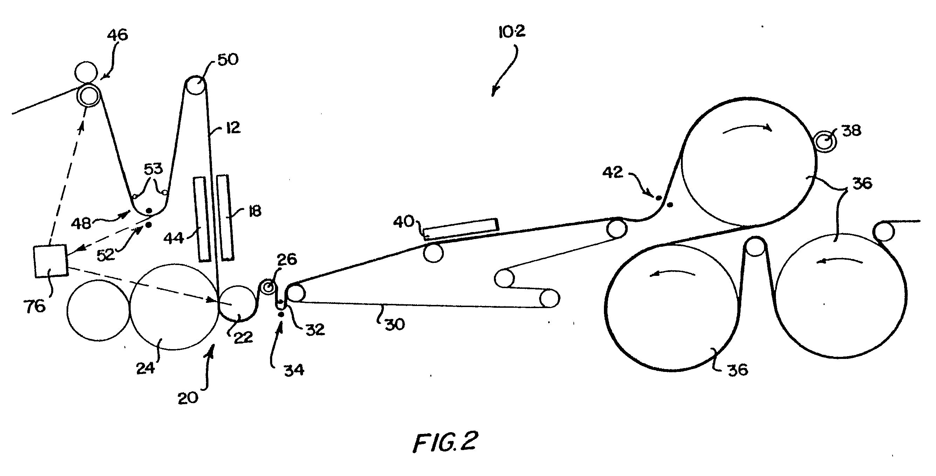

Referring now to Figure 2, the embossing apparatus 10.2 shown there differs from the apparatus 10.1 in that the heating drum 16 has been replaced by a radiant heater 44 which is arranged in opposition to the radiant heater so that, whereas the heater 18 will heat the front face of the web 12, the radiant heater 44 will heat the rear face of the web.

The web is pulled off the wind-off drum (not shown) by means of a driven nip 46. Downstream of the driven nip 46, the web is allowed to sag, as indicated at 48, from where the web then runs over an undriven roller 50 towards and between the heaters 18 and 44. The depth of sag is again controlled by utilising sensing means 52 to control the speed of the embossing roller 22 in relation to the driven nip 46. Stopper rollers 53 are provided to prevent excessive swinging of the sagging portion of the web. Where, as indicated in the drawing, the depth of the sag is less than the distance between the roller 50 and the embosser 20, the roller 50 may be provided with a small, known frictional resistance, to prevent the web from collapsing onto the embosser 20 under its own weight. In this embodiment the capacity of the heater 18 is higher than that used in the Figure 1 embodiment, so that it can be adjusted to raise the temperature of the front face of the web from room temperature to about 152°C whereas the heater 44 is adjusted to raise the rear face of the web from room temperature to a temperature of about 134°C.

It will be noted that, in the Figure 2 embodiment, there is no physical contact with the hanging portion of the web, between the roller 50 and the embosser 20, as it is being heated by the heaters 18 and 44. Accordingly, the tension in the web at any point between the roller 50 and the embosser 20 can be limited virtually to the weight of the web material between that point and the embosser 20. Because the web moves downwardly, the tension in the web as a result of its own weight decreases as it gets hotter. This is desirable.

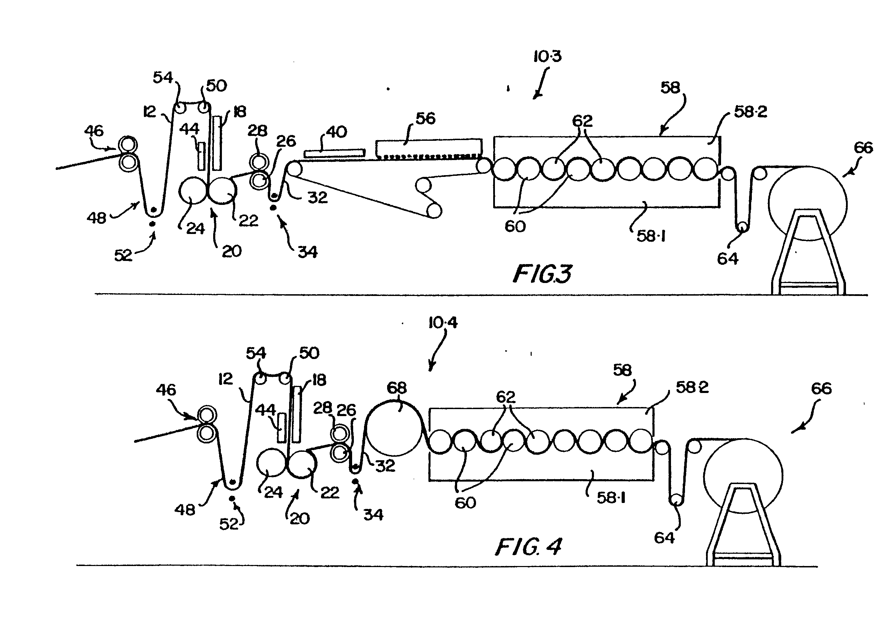

Referring now to Figure 3, the embossing apparatus 10.3 shown there differs from the apparatus shown earlier in that, unlike the embodiment shown in Figure 2, the depth of sag of the sagging portion 48 upstream of the roller 50 is greater than the distance between the roller 50 and the embosser 20. In this event, the roller 50, as well as an additional roller 54 provided, can be freely rotatable, as the greater weight of the hanging portion of the web upstream of the roller 50 will prevent the web from collapsing onto the embosser 20.

The apparatus 10.3 further differs from the embodiments shown in Figures 1 and 2 in that, in addition to the radiant heater 40 provided above the transportation belt 30, there is provided, downstream of the heater 40, a pre-cooler 56 for cooling the web 12 after its having been re-heated by the heater 40. Furthermore, instead of the cooling drums 36, a main cooling device 58 is provided which is in two halves, namely a lower half 58.1 and an upper half 58.2. The two halves 58.1 and 58.2 can be moved away from and towards one another in a vertical direction. The lower half 58.1 is provided with fixed, cylindrical, perforated ducts 60, whereas the upper half 58.2 is provided with fixed, cylindrical, perforated ducts 62.

In operation, cold air is blown by the pre-cooler 56 onto the web 12, thereby to pre-cool it. Furthermore, with the two halves 58.1 and 58.2 in the positions shown in the drawing, the web moves in an undulating fashion over the ducts 60 and 62. Cold air is blown into the ducts 60 and 62 from where it emerges through the perforations in the ducts in the form of small jets which cause the web 12 to float over the outer surfaces of the ducts. This has the effect of reducing friction between the web 12 and the ducts 60 and 62 to a minimum, as well as cooling the web. Furthermore, as the web flexes in moving up and down through the cooler, the thermoplastic material of the web is worked. This has been found to decrease dimensional instability of the end product.

From the main cooler 58, the web passes underneath a dancing roller 64, and from there to a wind-up mechanism 66. The dancing roller 64 is used to control the speed of the wind-up mechanism 66.

Referring now to Figure 4, the embossing apparatus 10.4 shown there differs from the earlier embodiments in that the transportation belt 30 and the heater 40 are replaced by a rotary heating drum 68 over which the web passes. From there the web is fed directly to the main cooler 58. This embodiment will be particularly suitable for film webs having a thickness of less than 300 micron. With such thin films, radiant heaters tend to cause shrivelling, and it is for this reason that a heating drum 68 instead of a radiant heater is used.

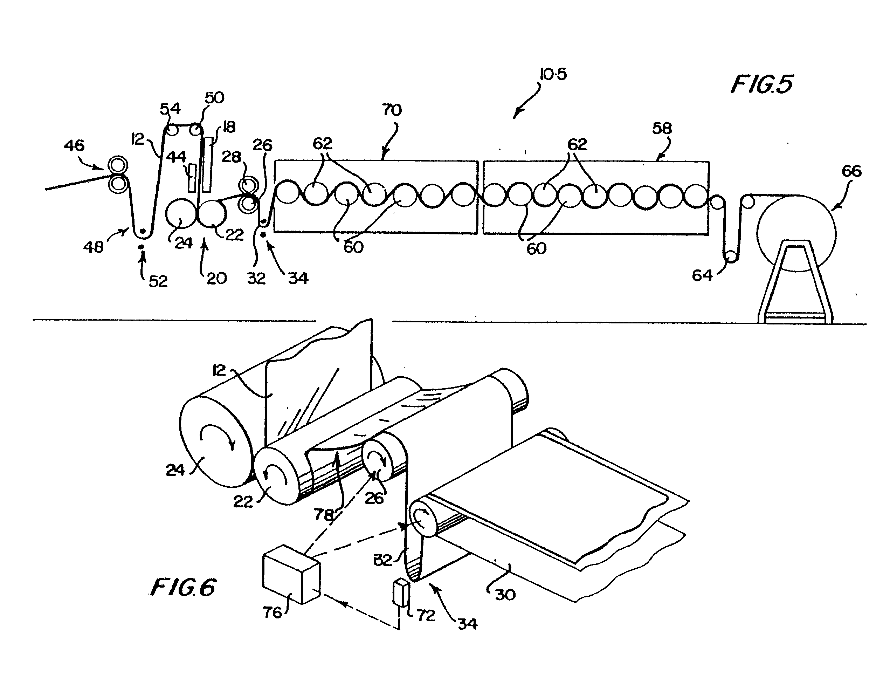

Referring now to Figure 5, the embossing apparatus 10.5 shown there differs from the earlier embodiments in the transportation belt 30 and the radiant heater 40 are replaced by heating means 70 which is similar to the cooling means 58 earlier described, except that, instead of causing cold air to issue from the perforated ducts 60, 62, hot air is caused to issue from these ducts. This embodiment will also be particularly suitable for film webs having a thickness of less than 300 micron.

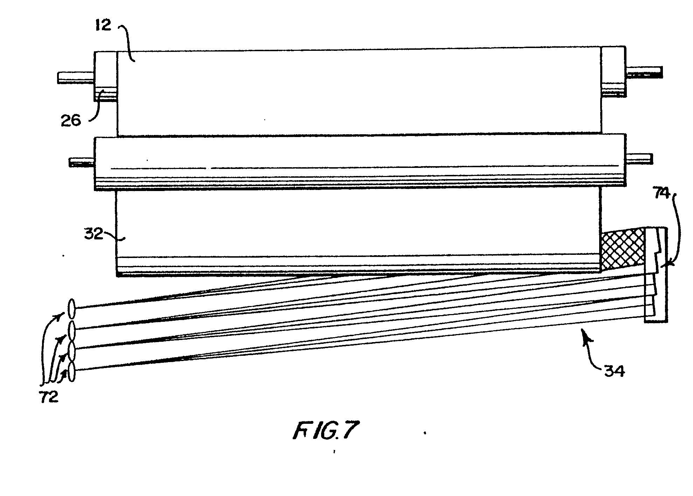

Referring now to Figures 6 and 7, it will be seen that the sensing means 34 comprises a number of light sources 72 on one side of the web 12, and a number of photo-electric sensors or cells 74 arranged on the other side of the web. The photo-electric sensors 74 are arranged at a level which is slightly higher than that of the light sources 72, so that the line of sight between the light sources 72 and the photo-electric sensors is at an angle to the horizontal. It will be seen that, as the depth of sag increases, the degree by which the web 12 interrupts the light issuing from the light sources 72 is increased. The photo-electric cells 74 provide an output signal which depends on the degree of interruption and is fed to control means 76. The control means 76 is operative to control the speed of the transportation belt 30 relative to the speed of the stripper roller 26.

Light sources, photo-electric sensors, and control means can be arranged in a similar manner in order to sense the depth of sag of the web between the embossing roller 22 and the stripper roller 26, as indicated by reference numeral 78. The output signal from the photo-electric sensors in this case is then used to control the speed of the stripper roller 26 in relation to the speed of the embossing roller 22, and hence the depth of sag. In this manner it can be ensured that the tension in the web between the stripper roller 26 and the embossing roller 22 is only just sufficient to strip the web from the embossing roller.

Similarly, as indicated in Figure 2, light sources, photo-electric sensors, and control means can be used to control the speed of the embossing roller in relation to that of the driven nip 46, the sensing means 52 being formed by light sources and photo-electric sensors as illustrated in Figure 7.

**Claims**

1. A method of embossing a continuous, moving web (12) on a face thereof formed by a thermoplastic material, which method comprises heating the web to a temperature sufficient for embossing to take place, passing the heated web through an embosser (20) to emboss the web, and drawing the web from the embosser under tension; characterised in that the web (12), after having emerged from the embosser (20) and having cooled, is reheated in a reheating station (40, 68, 70) to a temperature less than that at which the embossing is destroyed, and is thereafter cooled to room temperature; and in that the tension in the embosser and the reheating station is reduced by causing a portion of the web between the embosser and the reheating station to sag and thus form a first sagging portion (32), sensing the depth of the first sagging portion using first sensing means (34), and automatically in response to the first sensing means controlling the speed of movement in the reheating station relative to that in the embosser in accordance with the sensed depth of sag.

2. A method as claimed in claim 1, characterised in that the first sensing means (34) comprises a photo-electric emitter (72) and a photo-electric sensor (74) arranged to have the line of sight between them interrupted by the first sagging portion.

3. A method as claimed in claim 1 or claim 2, characterised in that the web (12) extends downwardly to the embosser (20) from an undriven roller (50); that the web is fed to the undriven roller by driven feed-in means (46), that the web is caused to sag and thus form a second sagging portion (48) between the feed-in means and the undriven roller; that the depth of sag of the second sagging portion is sensed using second sensing means (52); and that the speed of movement of the web in the embosser in relation so that in the feed-in means is automatically controlled in response to the second sensing means in accordance with the second depth of sag, thereby to control the tension in the web where the web enters the embosser.

4. A method as claimed in claim 3, characterised in that the second sensing means (52) comprises a photo-electric emitter (72) and a photo-electric sensor (74) arranged to have the line of sight between them interrupted by the second sagging portion.

5. A method as claimed in any one of the preceding claims, characterised in that the web (12) is worked during its being reheated or immediately after its having been reheated, by repeatedly flexing the web.

6. A method as claimed in any one of the preceding claims, wherein the cooling to room temperature takes place in a cooling station (36); characterised in that a portion of the web (12) between the reheating station (40) and the cooling station (36) is caused to sag and thus form a third sagging portion; that the depth of sag of the third sagging portion is sensed using third sensing means (42); and that the speed of movement of the web in the cooling station relative to that in the reheating station is automatically controlled in response to the third sensing means in accordance with the sensed depth of sag.

7. A method as claimed in claim 6, characterised in that the third sensing means (42) comprises a photo-electric emitter (72) and a photo-electric sensor (74) arranged to have line of sight between them interrupted by the third sagging portion.

8. Apparatus for embossing a continuous, moving web (12) on a face thereof formed by a thermoplastic material, which apparatus comprises: heating means (18) for heating the web to a temperature sufficient for embossing to take place; an embosser (20) for embossing the heated web; and stripping means (26) for drawing the web from the embosser under tension; characterised in that it further comprises reheating means (40, 68, 70) for reheating the web (12) after having emerged from the embosser (20) and having cooled; transportation means (30) for transporting the web past the reheating means; first sensing means (34) for sensing the depth of sag of a first sagging portion (32) of the web between the stripping means and the transportation means; and first control means (76), the first control means being operative in response to the first sensing means automatically to control the speed of the transportation means relative to that of the stripping means in accordance with the sensed depth of sag.

9. Apparatus as claimed in claim 8, charac-

terised in that the first sensing means (34) comprises a photo-electric emitter (72) and a photo-electric sensor (74) arranged to have the line of sight between them interrupted by the first sagging portion.

10. Apparatus as claimed in claim 8 or claim 9, characterised in that it further comprises a driven feed-in device (46) and an undriven roller (50) downstream of the feed-in device, for feeding the web (12) to the embosser (20); second sensing means (52) for sensing the depth of sag of a sagging portion (48) of the web between the feed-in device and the undriven roller; and second control means (76) operative in response to the second sensing means automatically to control the speed of the embosser (20) relative to that of the feed-in device (46) in accordance with the second depth of sag.

11. Apparatus as claimed in claim 10, characterised in that the second sensing means comprises photo-electric emitter (72) and a photo-electric sensor (74) arranged to have the line of sight between them interrupted by the second sagging portion.

12. Apparatus as claimed in any one of claims 8 to 11 and including a cooling station (36) for cooling the web to room temperature after said reheating, and drive means for moving the web through the cooling station; characterised in that it further comprises third sensing means (42) for sensing the depth of sag of a third sagging portion of the web (12) between the transportation means and the cooling station (36); and third control means (76), the third control means being operative in response to the third sensing means automatically to control the speed of said drive means relative to that of the transportation means in accordance with the sensed depth of sag.

13. Apparatus as claimed in claim 12, characterised in that the third sensing means (42) comprises a photo-electric emitter (72) and a photo-electric sensor (74) arranged to have the line of sight between them interrupted by the third sagging portion.

**Patentansprüche**

1. Verfahren zum Prägen einer kontinuierlichen, bewegten Bahn (12), die aus einem thermoplastischen Werkstoff besteht, auf ihrer Oberfläche, wobei das Verfahren das Erwärmen der Bahn auf eine zur Durchführung des Prägens ausreichende Temperatur, das Durchlaufen der erwärmten Bahn durch eine Prägevorrichtung (20), um die Bahn zu prägen, und das Abziehen der Bahn von der Prägevorrichtung unter einer Zugspannung umfaßt, dadurch gekennzeichnet, daß die Bahn (12), nachdem sie aus der Prägevorrichtung (20) ausgetreten und gekühlt ist, in einer Wiedererwärmungsstation (40, 68, 70) auf eine Temperatur, die geringer als die Temperatur ist, bei der die Prägung zerstört wird, wiedererwärmt und anschließend auf Raumtemperatur gekühlt wird, und daß die Zugspannung in der Bahn zwischen der Prägevorrichtung und der Wiedererwärmungsstation verringert wird, indem ein Abschnitt der Bahn zwischen der Prägevorrichtung und der Wiedererwärmungsstation zum Durchbiegen und dadurch zur Bildung eines ersten durchhängenden Abschnittes (32) gebracht wird, wobei die Tiefe der Durchhängung des ersten durchhängenden Abschnittes unter Verwendung einer ersten Erfassungsvorrichtung (34) erfaßt und die Geschwindigkeit der Bewegung der Bahn in der Wiedererwärmungsstation relativ zu der in der Prägevorrichtung gemäß der erfaßten Tiefe der Durchhängung automatisch in Abhängigkeit von der ersten Erfassungsvorrichtung gesteuert wird.

2. Verfahren nach Anspruch 1, dadurch gekennzeichnet, daß die erste Erfassungsvorrichtung (34) einen foto-elektrischen Emitter (72) und einen foto-elektrischen Sensor (74) aufweist, die so angeordnet sind, daß die Sichtlinie zwischen ihnen von dem ersten durchhängenden Abschnitt unterbrochen ist.

3. Verfahren nach Anspruch 1 oder 2, dadurch gekennzeichnet, daß die Bahn (12) von einer nichtangetriebenen Rolle (50) nach unten gerichtet zu der Prägevorrichtung (20) verläuft, daß die Bahn der nichtangetriebenen Rolle mittels einer angetriebenen Zuführvorrichtung (46) zugeführt wird, daß die Bahn zwischen der Zuführvorrichtung und der nichtangetriebenen Rolle zum Durchhängen und dadurch zur Bildung eines zweiten durchhängenden Abschnittes (48) gebracht wird, daß die Tiefe der Durchhängung des zweiten durchhängenden Abschnittes unter Verwendung einer zweiten Erfassungsvorrichtung (52) erfaßt wird und daß die Geschwindigkeit der Bewegung der Bahn in der Prägevorrichtung relativ zu der in der Zuführvorrichtung automatisch in Abhängigkeit von der zweiten Erfassungsvorrichtung gemäß der erfaßten Tiefe Durchhängung gesteuert wird, wodurch die Zugspannung in der Bahn an der Stelle, an der die Bahn in die Prägevorrichtung eintritt, gesteuert wird.

4. Verfahren nach Anspruch 3, dadurch gekennzeichnet, daß die zweite Erfassungsvorrichtung (52) einen foto-elektrischen Emitter (72) und einen foto-elektrischen Sensor (74) aufweist, die so angeordnet sind, daß die Sichtlinie zwischen ihnen von dem zweiten durchhängenden Abschnitt unterbrochen ist.

5. Verfahren nach einem der vorhergehenden Ansprüche, dadurch gekennzeichnet, daß die Bahn (12) während ihrer Wiedererwärmung oder unmittelbar nach ihrer Wiedererwärmung bearbeitet wird, indem sie wiederholt gebogen wird.

6. Verfahren nach einem der vorhergehenden Ansprüche, wobei das Kühlen auf Raumtemperatur in einer Kühlstation (36) durchgeführt wird, dadurch gekennzeichnet, daß ein Abschnitt der Bahn (12) zwischen der Wiedererwärmungsstation (40) und der Kühlstation (36) zum Durchhängen und dadurch zur Bildung eines dritten durchhängenden Abschnittes gebracht wird, daß die Tiefe der Durchhängung des dritten durchhängenden Abschnittes unter Verwendung einer dritten Erfassungsvorrichtung (42) erfaßt wird und daß die Geschwindigkeit der Bewegung der Bahn in der Kühlstation relativ zu der in der Wiedererwärmungsstation automatisch in Abhängigkeit von der dritten Erfassungsvorrichtung gemäß der erfaßten Tiefe der Durchhängung gesteuert wird.

7. Verfahren nach Anspruch 6, dadurch gekennzeichnet, daß die dritte Erfassungsvorrichtung (42) einen foto-elektrischen Emitter (72) und einen foto-elektrischen Sensor (74) aufweist, die so angeordnet sind, daß die Sichtlinie zwischen ihnen von dem dritten durchhängenden Abschnitt unterbrochen ist.

8. Vorrichtung zum Prägen einer kontinuierlichen, bewegten Bahn (12), die aus einem thermoplastischen Werkstoff besteht, auf ihrer Oberfläche, wobei die Vorrichtung eine Erwärmungsvorrichtung (18) zum Erwärmen der Bahn auf eine zur Durchführung des Prägens ausreichende Temperatur, eine Prägevorrichtung (20) zum Prägen der erwärmten Bahn, und eine Abstreifvorrichtung (26) zum Abziehen der Bahn von der Prägevorrichtung unter einer Zugspannung umfaßt, gekennzeichnet durch eine Wiedererwärmungsvorrichtung (40, 68, 70), um die Bahn (12), nachdem sie aus der Prägevorrichtung (20) ausgetreten und gekühlt ist, wiederzuerwärmen, eine Transportvorrichtung (30), um die Bahn nach Verlassen der Wiedererwärmungsvorrichtung zu transportieren, eine erste Erfassungsvorrichtung (34), um die Tiefe der Durchhängung eines ersten durchhängenden Abschnittes (32) der Bahn zwischen der Abstreifvorrichtung und der Transportvorrichtung zu erfassen, und eine erste Steuervorrichtung (76), die in Abhängigkeit von der ersten Erfassungsvorrichtung arbeitet und automatisch die Geschwindigkeit der Transportvorrichtung relativ zu der der Abstreifvorrichtung gemäß der erfaßten Tiefe der Durchhängung steuert.

9. Vorrichtung nach Anspruch 8, dadurch gekennzeichnet, daß die erste Erfassungsvorrichtung (34) einen foto-elektrischen Emitter (72) und einen foto-elektrischen Sensor (74) aufweist, die so angeordnet sind, daß die Sichtlinie zwischen ihnen von dem ersten durchhängenden Abschnitt unterbrochen ist.

10. Vorrichtung nach Anspruch 8 oder 9, gekennzeichnet durch eine angetriebene Zuführvorrichtung (46) und eine nichtangetriebene Rolle (50), die stromab von der Zuführvorrichtung angeordnet ist und die Bahn (12) der Prägevorrichtung (20) zuführt, eine zweite Erfassungsvorrichtung (52), um die Tiefe der Durchhängung eines durchhängenden Abschnittes (48) der Bahn zwischen der Zuführvorrichtung und der nichtangetriebenen Rolle zu erfassen, und eine zweite Steuervorrichtung (76), die in Abhängigkeit von der zweiten Erfassungsvorrichtung arbeitet und automatisch die Geschwindigkeit der Prägevorrichtung (20) relativ zu der der Zuführvorrichtung (46) gemäß der erfaßten Tiefe der Durchhängung steuert.

11. Vorrichtung nach Anspruch 10, dadurch gekennzeichnet, daß die zweite Erfassungsvorrichtung einen foto-elektrischen Emitter (72)

# 0 104 811

und einen foto-elekrischen Sensor (74) aufweist, die so angeordnet, daß die Sichtlinie zwischen ihnen von dem zweiten durchhängenden Abschnitt unterbrochen ist.

12. Vorrichtung nach einem der Ansprüche 8 bis 11, mit einer Kühlstation (36) zum Kühlen der Bahn auf Raumtemperatur nach der Wiedererwärmung und einer Antriebsvorrichtung zum Bewegen der Bahn durch die Kühlstation, gekennzeichnet durch eine dritte Erfassungsvorrichtung (42), um die Tiefe der Durchhängung eines dritten durchhängenden Abschnittes der Bahn (12) zwischen der Transportvorrichtung und der Kühlstation (36) zu erfassen, und eine dritte Steuervorrichtung (76), die in Abhängigkeit von der dritten Erfassungsvorrichtung arbeitet und automatisch die Geschwindigkeit der Antriebsvorrichtung relativ zu der der Transportvorrichtung gemäß der erfaßten Tiefe der Durchhängung steuert.

13. Vorrichtung nach Anspruch 12, dadurch gekennzeichnet, daß die dritte Erfassungsvorrichtung (42) einen foto-elektrischen Emitter (72) und einen foto-elektrischen Sensor (74) aufweist, die so angeordnet sind, daß die Sichtlinie zwischen ihnen von dem dritten durchhängenden Abschnitt unterbrochen ist.

**Revendications**

1. Un procédé de gaufrage d'une feuille continue mobile (12) sur une de ses faces formée d'une matière thermoplastique, ledit procédé consistant à chauffer la feuille jusqu'à une température suffisante pour que le gaufrage s'effectue, à faire passer la feuille chauffée dans un dispositif de gaufrage (20) pour gaufrer la feuille, et à tirer la feuille du dispositif de gaufrage sous tension; caractérisé en ce que la feuille (12), après être sortie du dispositif de gaufrage (20) et après avoir été refroidie, est réchauffée dans un poste de réchauffage (40, 68, 70) jusqu'à une température inférieure à celle à laquelle le gaufrage est détruit, et est ensuite refroidie jusqu'à la température ambiante; et en ce que la tension dans la feuille entre le dispositif de gaufrage et le poste de réchauffage est réduite en produisant une flexion d'une partie de la feuille entre le dispositif de gaufrage et le poste de réchauffage et en formant ainsi une première partie infléchie (32), en ce qu'on détecte la profondeur de flèche dê la première partie infléchie en utilisant un premier moyen de détection (34), et en ce qu'on effectue automatiquement, en réponse au premier moyen de détection, une commande de la vitesse de mouvement de la feuille dans le poste de réchauffage par rapport à celle dans le dispositif de gaufrage en concordance avec la profondeur de flèche détectée.

2. Un procédé tel que revendiqué dans la revendication 1, caractérisé en ce que le premier moyen de détection (34) comprend un émetteur photo-électrique (72) et un détecteur photo-électrique (74) disposés de façon que la ligne de vision existant entre eux soit interrompue par la première partie infléchie.

3. Un procédé tel que revendiqué dans la revendication 1 ou la revendication 2, caractérisé en ce que la feuille (12) s'étend vers le bas jusqu'au dispositif de gaufrage (20) à partir d'un rouleau non entraîné (50); en ce que la feuille est amenée jusqu'au rouleau non entraîné par un moyen mené d'introduction (46), en ce que la feuille est obligée de s'infléchir et de former ainsi une seconde partie infléchie (48) entre le moyen d'introduction et le rouleau non entraîné; en ce que la profondeur de flèche de la seconde partie infléchie est détectée en utilisant un second moyen de détection (52); et en ce que la vitesse de déplacement de la feuille dans le dispositif de gaufrage par rapport à celle dans le moyen d'introduction est automatiquement commandée en réponse au second moyen de détection et en concordance avec la profondeur de flèche détectée, en vue de commander ainsi la tension dans la feuille dans la zone où celle-ci pénètre dans le dispositif de gaufrage.

4. Un procédé tel que revendiqué dans la revendication 3, caractérisé en ce que le second moyen de détection (52) comprend un émetteur photo-électrique (72) et un détecteur photo-électrique (74) agencés de façon que la ligne de vision établie entre eux soit interrompue par la seconde partie infléchie.

5. Un procédé tel que revendiqué dans une quelconque des revendications précédentes, caractérisé en ce que la feuille (12) est travaillée pendant qu'elle est en train d'être réchauffée ou bien immédiatement après qu'elle a été réchauffée, par flexion répétée de la feuille.

6. Un procédé tel que revendiqué dans une quelconque des revendications précédentes, selon lequel le refroidissement jusqu'à la températeur ambiante est effectué dans un poste de refroidisement (36); caractérisé en ce qu'une partie de la feuille (12) est obligée de s'infléchir entre le poste de réchauffage (40) et le poste de refroidissement (36) et forme ainsi une troisième partie infléchie; en ce que la profondeur de flèche de la troisième partie infléchie est détectée en utilisant un troisième moyen de détection (42); et en ce que la vitesse de déplacement de la feuille dans le poste de refroidissement par rapport à celle dans le poste de réchauffage est automatiquement commandée en réponse au troisième moyen de détection et en concordance avec la profondeur de flèche détectée.

7. Un procédé tel que revendiqué dans la revendication 6, caractérisé en ce que le troisième moyen de détection (42) comprend un émetteur photo-électrique (72) et un détecteur photo-électrique (74) agencés de façon que la ligne de vision établie entre eux soit interrompue par la troisième partie infléchie.

8. Appareillage de gaufrage d'une feuille continue mobile (12) sur une de ses faces formée d'une matière thermoplastique, ledit appareillage comprenant: un moyen de chauffage (18) pour chauffer la feuille jusqu'à une température suffisante pour que le gaufrage s'effectue; un dispositif de gaufrage (20) pour gaufrer la feuille chauffée; et un moyen d'éjection (26) pour tirer la feuille hors du dispositif de gaufrage sous tension; caractérisé en ce qu'il comprend en outre un moyen de réchauffage (40, 68, 70) pour réchauffer la feuille (12) après qu'elle est sortie du dispositif de gaufrage (20) et qu'elle a été refroidie; un moyen de transport (30) servant à transporter la feuille au delà du moyen de réchauffage; un premier moyen de détection (34) pour détecter la profondeur de flèche d'une première partie inflèchie (32) de la feuille entre le moyen d'éjection et le moyen de transport; et un premier moyen de commande (76), ce premier moyen de commande opérant en réponse au premier moyen de détection automatiquement pour commander la vitesse du moyen de transport par rapport à celle du moyen d'éjection en concordance avec la profondeur de flèche détectée.

9. Appareillage tel que revendiqué dans la revendication 8, caractérisé en ce que le premier moyen de détection (34) comprend un émetteur photo-électrique (72) et un détecteur photo-électrique (74) agencés de façon que la ligne de vision établie entre eux soit interrompue par la première partie infléchie.

10. Appareillage tel que revendiqué dans la revendication 8 ou la revendication 9, caractérisé en ce qu'il comprend en outre un dispositif mené d'introduction (46) et un rouleau non mené (50) placé en aval du dispositif d'introduction pour faire parvenir la feuille (12) au dispositif de gaufrage (20); un second moyen de détection (52) pour détecter la profondeur de flèche d'une partie infléchie (48) de la feuille entre le dispositif d'introduction et le rouleau non mené; et un second moyen de commande (76) opérant en réponse au second moyen de détection automatiquement pour commander la vitesse du dispositif de gaufrage (20) par rapport à celle du dispositif d'introduction (46) en concordance avec la profondeur de flèche détectée.

11. Appareillage tel que revendiqué dans la revendication 10, caractérisé en ce que le second moyen de détection comprend un émetteur photo-électrique (72) et un détecteur photo-électrique (74) agencés de façon que la ligne de vision établie entre eux soit interrompue par la seconde partie infléchie.

12. Appareillage tel que revendiqué dans une quelconque des revendications 8 à 11 et comprenant un poste de refroidissement (36) pour refroidir la feuille jusqu'à la température ambiante après ledit réchauffage, et un moyen d'entraînement pour déplacer la feuille au travers du poste de refroidissement; caractérisé en ce qu'il comprend en outre un troisième moyen de détection (42) pour détecter la profondeur de flèche d'une troisième partie infléchie de la feuille (12) entre le moyen de transport et le poste de refroidissement (36); et un troisième moyen de commande (76), ce troisième moyen de commande opérant en réponse au troisième moyen de détection automatiquement pour commander la vitesse dudit moyen d'entraînement par rapport à celle dudit moyen de transport en concordance avec la profondeur de flèche détectée.

13. Appareillage tel que revendiqué dans la revendication 12, caractérisé en ce que le troisième moyen de détection (42) comprend un émetteur photo-électrique (72) et un détecteur photo-électrique (74) agencés de façon que la ligne de vision établie entre eux soit interrompue par la troisième partie infléchie.

FIG. 1

FIG.2

0 104 811

FIG.3

FIG.4

FIG.5

FIG.6

FIG. 7